# EUROPEAN PATENT SPECIFICATION

(11) **EP 2 034 705 B1**
(45) Date of publication and mention of the grant of the patent: **21.08.2013**
(21) Application number: 07745012.0
(22) Date of filing: 11.06.2007
(51) Int. Cl.: H04M 1/67, H04B 7/26, H04M 1/00, H04M 1/725, H04W 52/02

(54) **MOBILE WIRELESS TERMINAL DEVICE**
MOBILES DRAHTLOSES ENDGERÄT
DISPOSITIF DE TERMINAL MOBILE SANS FIL

(30) Priority: 15.06.2006 JP 2006166411
(43) Date of publication of application: 11.03.2009
(73) Proprietor: NEC Corporation, Minato-ku Tokyo 108-8001 (JP)
(72) Inventor: ISOBE, Osamu, Kodama-gun, Saitama 367-0297 (JP)
(74) Representative: Vossius & Partner
(86) International application number: PCT/JP2007/061722
(87) International publication number: WO 2007/145166

(56) References cited:
- JP-A- 2002 027 551
- JP-A- 2002 027 551
- JP-A- 2002 165 265
- JP-A- 2004 349 935

## Description

### TECHNICAL FIELD

The present invention relates to a technology that sets limitations on the function of a mobile wireless terminal, such as a mobile phone, in a predetermined area, and more particularly to a technology that sets or releases limitations on the function of a mobile wireless terminal that has a non-contact IC when the user with the mobile wireless terminal enters or exits a predetermined area.

### BACKGROUND ART

In many public transports such as railways, an announcement is made in many cases for passengers in the train cars to refrain from making phone calls, and they are required to set their mobile phones to silent mode or turn off the power. However, many users do not change the setting because the operation is cumbersome. To solve this problem, many methods are proposed to automatically put limitations on a mobile phone that is moved to an area where the use of the mobile phone is limited.

For example, as a means for setting a mobile phone automatically to silent mode, Patent Document 1 proposes a method that uses Bluetooth (registered trademark). The problem is that this method requires a Bluetooth signal generating device to be installed in the locations where silent mode is necessary and that the need to always supply the power to the Bluetooth module in a mobile phone to receive the Bluetooth signal increases the power consumption and therefore shortens the use time of the mobile phone per charge.

On the other hand, many recent mobile phones have a non-contact IC installed therein. Systems allowing the user to use a non-contact IC for payment are widely used, for example, in convenience stores, and systems allowing the user to go through the ticket gate of a railway station using a non-contact IC installed in a mobile phone are being introduced. For use in those systems, Patent Documents 2-4 propose technologies that automatically switch a mobile phone to silent mode or turn off the power at the same time the user goes through the ticket gate of a railway station using a non-contact IC. Those proposed technologies eliminate the need for the user to perform a cumbersome setting-change operation and, at the same time, eliminate the need for installing a special device specifically designed for Bluetooth for limiting the function of a mobile phone.

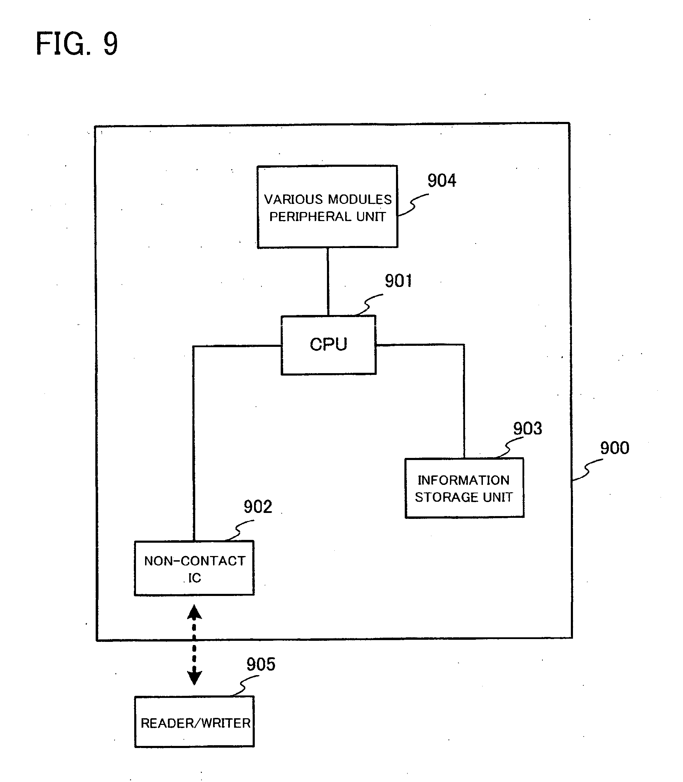

FIG. 9 is a block diagram showing an example of the configuration of a conventional mobile phone that has such a non-contact IC installed therein for limiting the function of the mobile phone.

Referring to FIG. 9, a mobile phone 900 comprises a miscellaneous-module peripheral unit 904 including the modules of a standard mobile phone such as a radio unit, a camera, and a display unit such as an LCD, a CPU 901 that controls the operation of the units and modules 904, an information storage unit 903 that stores control programs or various types of information used by the CPU 901 for controlling the operation of the units and modules 904, and a readable/writable non-contact IC 902.

The non-contact IC 902 reads function limiting information from a non-contact IC reader/writer 905 installed in the ticket gate of a railway station and stores the information in the storage unit in the non-contact IC 902. After confirming that the function limiting information is stored in the non-contact IC 902, the CPU 901 of the mobile phone 900 reads the function limiting information from the non-contact IC 902 and, based on the function limiting information, executes the function-limiting control specified by the function limiting information stored in the miscellaneous-module peripheral unit 904

Patent Document 1: Japanese Patent Kokai Publication No.JP-P2004-032394A
Patent Document 2: Japanese Patent Kokai Publication No JP-P2004-349935A
Patent Document 3: Japanese Patent Kokai Publication No. JP-P2004-349994A
Patent Document 4: Japanese Patent Kokai Publication No JP-P2005-012354 A
JP-2002-027551 relates to a remote control device, wherein an automated ticket gate reads out data from a portable telephone and transmits a control signal used to limit a function of the telephone.
JP-2004-349935 describes that the functions of a portable telephone are automatically restricted and/or released from the restriction.

### DISCLOSURE OF THE INVENTION

### PROBLEMS TO BE SOLVED BY THE INVENTION

The following analysis is given by the present invention.
In the method for setting the power of a conventional mobile phone, in which a non-contact IC is installed, to the off state with the function limitation activated, it is still necessary to supply power to the CPU or the information storage unit of the mobile phone because the function limiting information on the mobile phone must be read from the non-contact IC even when the power of the mobile phone is off.

That is, when the power on/off state of a mobile phone is controlled by means of a non-contact IC, there is the following problem. If the power of a mobile phone is turned off and the CPU is put in the dormant state, the CPU cannot access the non-contact IC and cannot read information from the non-contact IC and, therefore, the power of a mobile phone, which is off, cannot be turned on using the control information from the non-contact IC. To solve this problem, when the power of a mobile phone is on/off controlled, it is necessary to always supply power to the CPU to put it in operation to enable it to always access the non-contact IC even when the power of the mobile phone is turned off.

However, when the power of a mobile phone is off and the functions of the mobile phone are in the stopped state, always supplying the operation power to the CPU, which controls all functions of various modules of the mobile phone, means wasteful power consumption from the viewpoint of current consumption. The problem in this case is a reduction in the usable time per charge of a mobile phone in which a secondary battery is used as the power supply.

In view of the foregoing, it is an object of the present invention to provide means that automatically performs the power on/off control of a mobile phone, which uses a non-contact IC, while minimizing the power consumption.

### MEANS TO SOLVE THE PROBLEMS

According to one aspect of the present invention, there is provided a mobile wireless terminal comprising various function modules controlled by CPU; and a non-contact IC that receives function limiting information from a reader/writer installed in a predetermined area, the function limiting information indicating power on/off upon entry into, or exit from, the predetermined area. The mobile wireless terminal further comprises: a CPU that can change over to a dormant (or stand-by) state in which an interrupt signal can be accepted; and a non-contact IC control unit that operates intermittently regardless of an operating status of the CPU and, upon recognizing that the non-contact IC has received function limiting information from the reader/writer, outputs an interrupt signal and the function limiting information to the CPU. The CPU (a) turns off power supplied to the various function modules when the interrupt signal and function limiting information indicating power-off are received and, after that, changes over to the dormant state, and (b) returns to a non-dormant state when the interrupt signal and function limiting information indicating power-on are received in the dormant state and, after that, turns on the power supplied to the various function modules; and the mobile wireless terminal further comprises non-contact IC usage status notifying means, such as an LED, to notify the usage status of the non-contact IC, provided in this mobile wireless terminal, to a user, according to claim 1. Controlling the lighting operation of this non-contact IC usage status notifying means by means of the non-contact IC control unit allows the user to recognize the usage status of the non-contact IC even when the CPU is in the dormant state.

In other words, the mobile wireless terminal comprises various function modules controlled by a CPU; a non-contact IC that performs short-distance communication with a reader/writer installed at the entrance/exit of a predetermined area to perform communication for checking entry and exit; and a non-contact IC control unit that regularly accesses the non-contact IC and, if it is recognized that the information received from the reader/writer and stored by the non-contact IC includes a new function limiting information on the function modules, outputs the interrupt signal and the function limiting information to the CPU. When the interrupt signal and the function limiting information indicating that the power of the mobile wireless terminal should be turned off are received, the CPU turns off the power supplied to the various function modules and, after that, changes over the CPU itself to the dormant state except the function that accepts the interrupt signal. When the interrupt signal and function limiting information indicating that the power-off of the mobile wireless terminal should be released are received in the dormant state, the CPU changes over the CPU itself to the normal operation state and, after that, turns on the power supplied to the various function modules.

It is possible to cause the CPU to save the current state of the various function modules of the mobile wireless terminal in an information storage unit when information indicating the setting of function limitations is received as the function limiting information, and it is possible to cause the CPU to return the state of the various function modules to the state, stored in the information storage unit, by referencing the information storage unit when information indicating the release of function limitations is received as the function limiting information.

Only when the function limiting information that is newly read from the non-contact IC is different from the function limiting information that was previously read and is saved in a buffer, it is possible to cause the non-contact IC control unit to output the interrupt signal and the newly-read function limiting information for updating the content saved in the buffer with the newly-read function limiting information.

### MERITORIOUS EFFECTS OF THE INVENTION

In the present invention, the function limiting information, read from the reader/writer by the non-contact IC, is output to the CPU, which controls the various functions of the mobile wireless terminal, via the non-contact IC control unit. This configuration allows the CPU to change over to the dormant state when the function limiting information indicating that the power of the mobile wireless terminal should be turned off is received, with a result that the power consumption can be reduced and the usable time per charge can be extended.

In addition, the non-contact IC control unit, which checks the non-contact IC for information only intermittently, requires less power consumption for the checking operation and, if the checking result indicates that the information does not change from the previous function limiting information, does not generate an interrupt signal to be sent to the CPU, thus reducing the current consumption.

### BRIEF DESCRIPTION OF THE DRAWINGS

FIG. 1 is a general diagram showing an example of a ticket gate system of a railway station where an area entry/exit system using a mobile phone of the present invention, which has a non-contact IC, is applicable.
FIG. 2 is a block configuration diagram showing a mobile phone in which a non-contact IC in a first exemplary embodiment of the present invention is installed.
FIG. 3 is a block configuration diagram showing a non-contact IC control unit in this exemplary embodiment.
FIG. 4 is a format showing an example of function limiting information sent from a non-contact IC reader/writer installed at the ticket gate of a railway station.
FIG. 5 is a flowchart showing the operation of this exemplary embodiment.
FIG. 6 is a flowchart showing the operation of this exemplary embodiment.
FIG. 7 is a block configuration diagram of a mobile phone in a second exemplary embodiment of the present invention in which a non-contact IC is installed.
FIG. 8 is a configuration block diagram of a non-contact IC control unit in the second exemplary embodiment.
FIG. 9 is a block diagram showing an example of a configuration of a conventional mobile phone in which a non-contact IC is installed.

### PREFERRED MODES FOR CARRYING OUT THE INVENTION

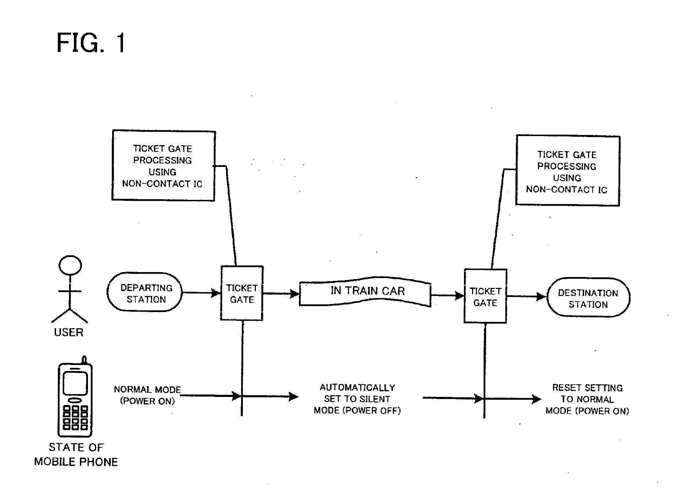

FIG. 1 is a general diagram showing an example of the ticket gate system of a railway station where an area entry/exit system using a mobile phone of the present invention, which has a non-contact IC, is applicable.

In this system, before the user enters through the ticket gate, the power of a mobile phone is on and the mobile phone operates in the normal mode. When the user enters through the ticket gate using the non-contact IC included in the mobile phone and the non-contact IC receives a mobile phone power-off instruction, the mobile phone automatically turns off the power and changes over to a silent mode. When the user exits through the ticket gate and the non-contact IC receives a mobile phone power-off release instruction, the mobile phone turns on the power again and returns to a normal mode.

This system provides the mobile phone function limiting information from the non-contact IC reader/writer already installed in the ticket gate apparatus as ticket gate means, thus eliminating the need for adding a new special device for limiting the mobile phone function. In addition, the ability of the non-contact IC to write information received from the reader/writer even when the power of the mobile phone is off allows a non-contact IC control unit to intermittently read information in the non-contact IC.

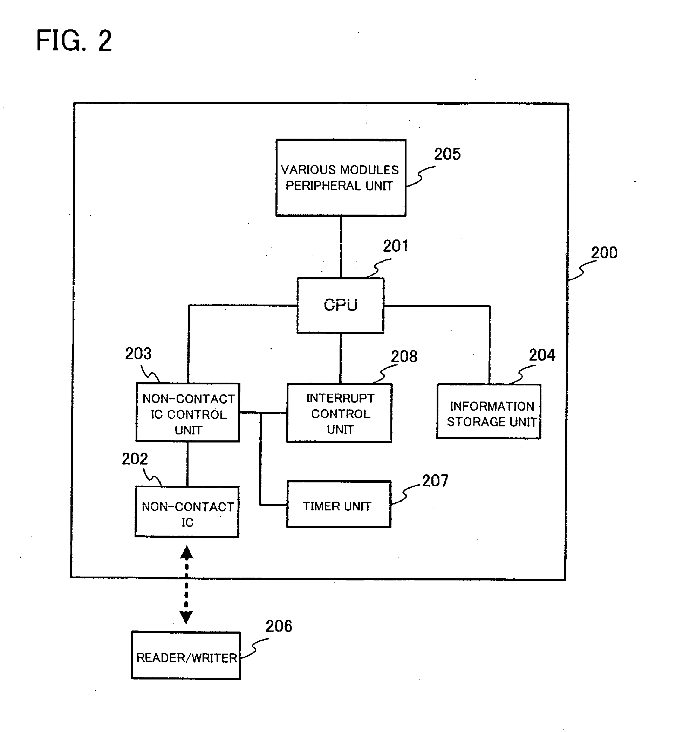

FIG. 2 is a block configuration diagram showing a mobile phone in which a non-contact IC in a first exemplary embodiment of the present invention is installed.

A mobile phone 200 in this exemplary embodiment in which a non-contact IC is installed comprises a CPU 201 that controls the units and modules provided in the mobile phone 200 such as a radio unit, a camera, and a display unit such as an LCD; a non-contact IC 202 from or to which information can be read and written; a non-contact IC control unit 203 that controls the non-contact IC 202; an information storage unit 204 that stores control programs and various types of information used by the CPU 201 to control the units and modules; a peripheral unit 205 that includes various modules such as a radio unit, a camera, a display unit such as an LCD whose operations are controlled by the CPU 201; a timer unit 207; and an interrupt control unit 208 that outputs an interrupt signal, which is received from the non-contact IC control unit 203, to the CPU 201.

To allow for short distance wireless communications with a non-contact IC reader/writer 206 installed in a ticket gate apparatus when the user with this mobile phone 200 goes through the ticket gate of a railway station, the non-contact IC 202 reads function limiting information from the reader/writer 206 when the user places the mobile phone 200 over the non-contact IC reader/writer 206 and stores the information in the non-contact IC 202.

In response to an interrupt from the timer unit 207, the non-contact IC control unit 203 accesses the non-contact IC 202 regularly to check if information is stored. If it is found that function limiting information is stored in the non-contact IC 202, the non-contact IC control unit 203 outputs an interrupt signal to the interrupt control unit 208. In response to the interrupt signal from the interrupt control unit 208, the CPU 201 receives the function limiting information from the non-contact IC control unit 203.

Based on the function limiting information received from the non-contact IC control unit 203, the CPU 201 performs the control operation to limit the function of the various modules peripheral unit 205 and, if the function limiting information indicates that the power of the mobile phone 200 should be turned off, turns off the power supplied to the miscellaneous-module peripheral unit 205. At the same time, the CPU 201 puts the CPU 201 itself in the dormant (stand-by) state, in which only an interrupt request to release the dormant state may be received from an external source, to minimize the current consumption of the CPU 201.

The power is always supplied to the non-contact IC 202, non-contact IC control unit 203, timer unit 207, and interrupt control unit 208 regardless of the power control information. However, because the non-contact IC control unit 203 is required only to intermittently check the non-contact IC 202 for information, the power consumption of the non-contact IC control unit 203 and the timer unit 207 is much smaller than that supplied to the CPU 201 that controls the whole mobile phone 200.

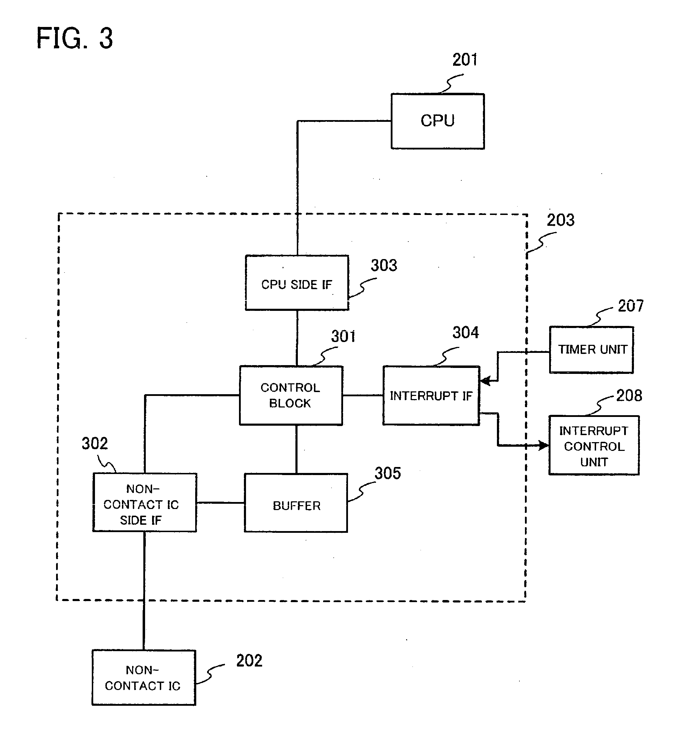

FIG. 3 is a configuration block diagram showing the non-contact IC control unit 203 of the mobile phone in this exemplary embodiment.

In response to an interrupt from the timer unit 207, the non-contact IC control unit 203 intermittently accesses the non-contact IC 202. The interval at which the timer unit 207 generates an interrupt is set to such an interval that the read operation is performed at least once while the user keeps the mobile phone placed over the reader/writer on the ticket gate.

When an interrupt IF (interface) 304 of the non-contact IC control unit 203 receives the interrupt from the timer unit 207, a control block 301 accesses the non-contact IC 202 via a non-contact IC side IF 302, reads information from the non-contact IC 202, and stores the read information in a buffer 305. If the read information includes new function limiting information, the control block 301 outputs an interrupt signal to the interrupt control unit 208 and at the same time sends the read information to the CPU 201 via a CPU side IF 303.

If the function limiting information received from the non-contact IC control unit 203 is function limiting information indicating that the power should be turned off, the CPU 201 switches off the power supply to the various modules peripheral unit 205 of the mobile phone and enters the dormant (stand-by) state in which the current consumption of the CPU 201 itself is minimized. In this state, when the non-contact IC control unit 203 reads information from the non-contact IC 202 indicating that the power of the mobile phone should be turned on again, the CPU 201 receives an interrupt signal from the interrupt control unit 208 to release the dormant state and enters (changes over to) the normal operating state.

After that, when the information indicating that the power of the mobile phone should be turned on again is received via the CPU side IF 303, the CPU 201 turns on the power supplied to the miscellaneous-module peripheral unit 205. So, even if the power of the mobile phone is turned off and the current consumption of the CPU 201 becomes too low for the CPU 201 to access the non-contact IC 202, the function limitation releasing information from the reader/writer 206 automatically turns on the power of the mobile phone.

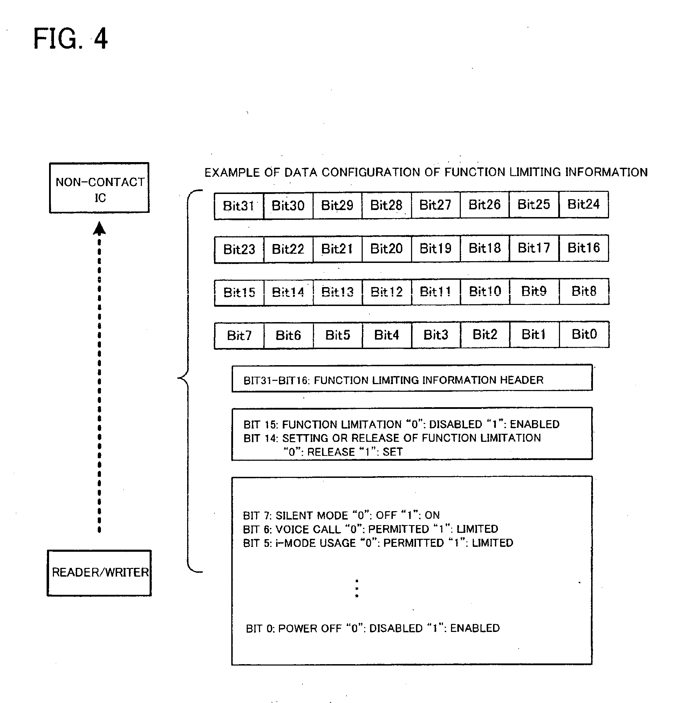

FIG. 4 shows an example of function limiting information sent from the non-contact IC reader/writer installed in the ticket gate of a railway station. The information is composed of 32-bit data. The high-order 16 bits represent a header indicating that the information is function limiting information, and each of the low-order 16 bits is set to "0" or "1" to represent information for controlling the setting of limitations on, or the release of limitations from, a function.

The first bit, bit 15, indicates the presence/absence of function limiting information. This bit is set to "0" when there is no need to automatically limit the functions, and set to "1" when there is a need to limit the functions. Bit 14 indicates the setting or release of function limitations. This bit is set to "1" to limit the functions automatically, and set to "0" to release the function limitation, which has been set, and return the state to the original state. Bit 13 to bit 0 are used whether or not each function is to be limited. For example, bit 7 is set to "1" to change over to the mobile phone to silent mode, and bit 0 is set to "1" to turn off the power of the mobile phone.

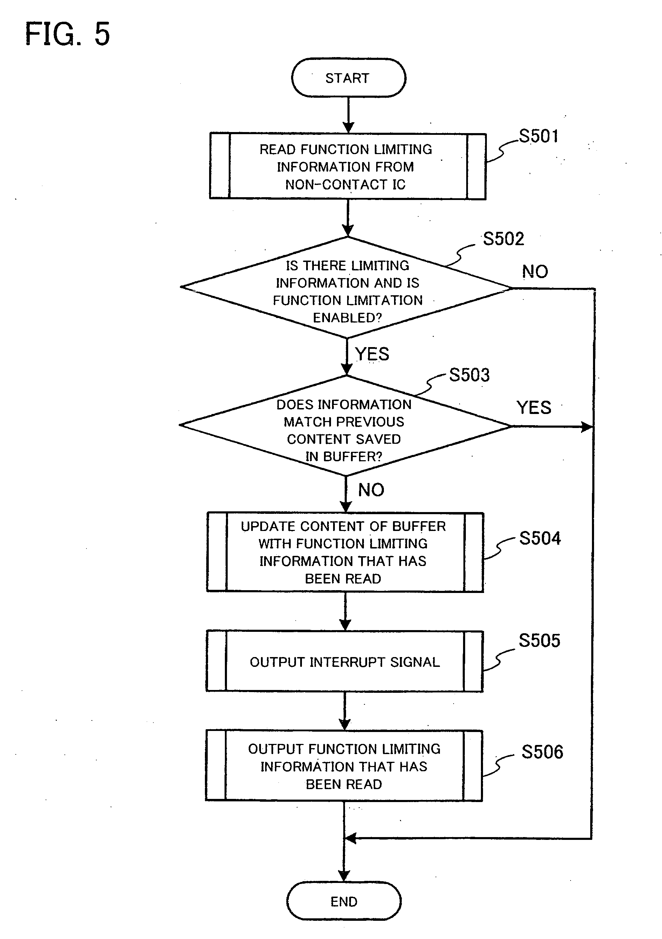

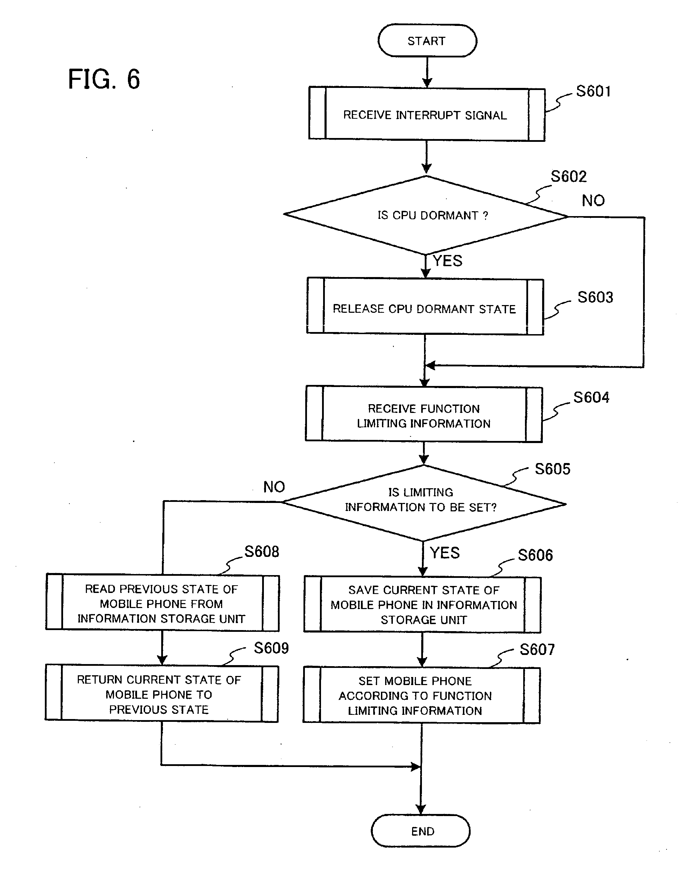

FIG. 5 is a flowchart showing the operation of the non-contact IC control unit 203 of the mobile phone in this exemplary embodiment. FIG. 6 is a flowchart showing the operation of the CPU 201 of the mobile phone in this exemplary embodiment. The following describes the operation of this exemplary embodiment with reference to FIG. 2 to FIG. 6.

The non-contact IC control unit 203 reads information, which is acquired and stored by the non-contact IC 202 via short-distance wireless communication with the reader/writer 206, each time an interrupt is received from the timer unit 207 (S501). Next, the non-contact IC control unit 203 checks if the data that has been read includes function limiting information on the mobile phone shown in FIG. 4 and checks bit 15 to determine if the function limitation is enabled (S502). If there is no function limiting information or if the function limitation is not enabled (No in S502), the non-contact IC control unit 203 terminates the processing.

If the data that has been read includes function limiting information on the mobile phone and if the function limitation is enabled (Yes in S502), the non-contact IC control unit 203 compares the content of this function limiting information with a previous content stored in the buffer 305 to determine if they match (S503). If the content of the function limiting information that has been read matches the previous content stored in the buffer 305 (Yes in S503), the non-contact IC control unit 203 terminates the processing.

If the content of the function limiting information that has been read does not match the previous content stored in the buffer 305 (No in S503), the non-contact IC control unit 203 updates the content stored in the buffer 305 with the content of the function limiting information that has been read (S504), outputs the interrupt signal to the interrupt control unit 208 via the interrupt IF 304 (S505), and outputs the function limiting information, which has been read, to the CPU 201 via the CPU side IF 303 (S506).

On the other hand, when the interrupt signal is received from the non-contact IC control unit 203 via the interrupt control unit 208 (S601), the CPU 201 waits for the function limiting information to be output from the non-contact IC control unit 203. At this time, if the CPU 201 is in the dormant (stand-by) state (Yes in S602), the CPU 201 releases the dormant state (S603), changes over to the normal operation state, and receives the function limiting information from the non-contact IC control unit 203 (S604).

Next, the CPU 201 checks bit 14 to find which is specified, setting of function limitation or release of function limitation (S605). If the information indicates the setting of function limitation (Yes in S605), the CPU 201 first saves a current function setting state (state of the function modules before the function limitation) of the mobile phone in the information storage unit 204 (S606) and, after that, changes the function limitation state of the mobile phone according to the received function limiting information (S607).

At this time, if the function limiting information indicates that the power of the mobile phone should be turned off, the CPU 201 turns off the power supplied to the miscellaneous-module peripheral unit 205 and, at the same time, changes over the CPU 201 and the information storage unit 205 [sic. 204] to the dormant (stand-by) state while retaining only their ability to accept an interrupt request so that the current consumption of the CPU 201 and the information storage unit 205 [sic. 204] is minimized.

If the received function limiting information indicates that the function limitation should be released (No in S605), the CPU 201 reads the function setting state of the mobile phone (state of function modules before the function limitation) saved in the information storage unit 204 (S608) and, using the information that has been read, sets the functions of the mobile phone to return the state of the mobile phone to the previous state (S609).

If the function limitation was manually set by the user before the function limiting information is read from the non-contact IC control unit 203, for example, if the camera function was turned off or silent mode was set, the function limitations that were set by the user must be retained because releasing those settings in accordance with the function limitation release information is not intended by the user.

To meet this need, the function setting state that was previously set by the user is saved in the information storage unit 204 in step 606. And, if the function limiting information, which is read from the non-contact IC control unit 203, indicates that the function limitation should be released, the function limitation on the function setting state of the function modules, which is read from the information storage unit 204 in step 608, is set for continued use independently of the function limitation release information read from the non-contact IC control unit 203 (S609).

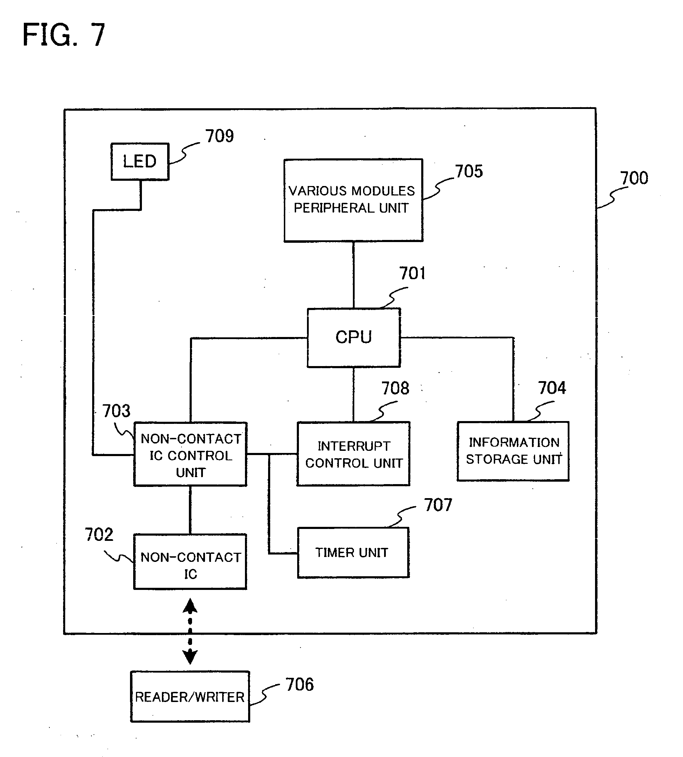

FIG. 7 is a block configuration diagram of a mobile phone in a second exemplary embodiment of the present invention in which a non-contact IC is installed. This exemplary embodiment has a configuration in which a part of the peripheral modules of the mobile phone may be controlled using a non-contact IC control unit.

Referring to FIG. 7, this exemplary embodiment is similar to the first exemplary embodiment in that this exemplary embodiment comprises a CPU 701 that controls the units and modules of a mobile phone 700 such as a radio unit, a camera, and a display unit such as an LCD; a non-contact IC 702 from and to which data can be read and written; a non-contact IC control unit 703 that controls the non-contact IC 702; an information storage unit 704 that stores various types of information; a peripheral unit 705 including the modules of the radio unit, camera, and the display unit such as an LCD; a timer unit 707; and an interrupt control unit 708 that outputs the interrupt signal, which is received from the non-contact IC control unit 703, to the CPU 701, but is different in that an LED 709 controlled by the non-contact IC control unit 703 is provided.

This LED 709 has a function to notify a user about usage status of the non-contact IC. When communication between a reader/writer 706 and the non-contact IC 702 is started, the non-contact IC control unit 703 that accesses the non-contact IC 702 senses that the communication has been started and turns on the LED 709. This means that the lighting of the LED 709 can be controlled not via the CPU 701, allowing the user to recognize the usage status of the non-contact IC 702 even when the CPU 701 is in the dormant state.

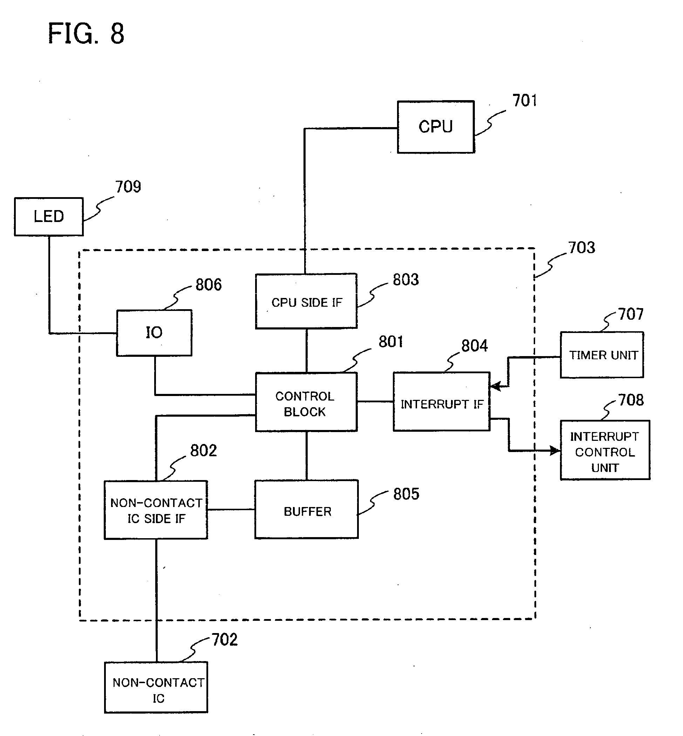

FIG. 8 is a configuration block diagram of the non-contact IC control unit 703 in the second exemplary embodiment.

When the non-contact IC 702 recognizes that information is received from an external source, a control block 801 outputs a current to the LED 709 via an 10 806. By doing so, the LED 709 can be turned on when the non-contact IC 702 is used even if the power of the mobile phone is turned off. Alternatively, the exemplary embodiment can be configured by providing a speaker to allow the user to recognize the usage status of the non-contact IC 702, not by the LED but by sound. The other operation of this exemplary embodiment is the same as that of the first exemplary embodiment and so the description of the operation is omitted here.

While the present invention has been described with reference to the exemplary embodiments described above, it is to be understood that the present invention is not limited to the exemplary embodiments described above but various additions, changes, and adjustments may be made based on the basic technical concept. In addition, various disclosed elements may be combined, released, and selected in various ways within the scope of the claims of the present invention. For example, though the present invention is applied to a mobile phone in the exemplary embodiments described above, the present invention is applicable also to various mobile wireless terminals such as a PDA(Personal Digital Assistant), a wireless LAN terminal, and so on.

Although an example of the ticket gate system of a railway station was described in the exemplary embodiments described above, the present invention is not limited to those exemplary embodiments but is applicable also to the entry into, or exit from, an area such as an airplane, a theater, and a concert hall where the functions of a wireless mobile terminal must be limited and, according to the characteristics of those areas, the wireless mobile terminal may be modified as necessary.

If the received function limiting information indicates the setting of function limitations in the exemplary embodiments described above, the function limitation state of a wireless mobile terminal is changed according to the received function limiting information. Because a forced setting change sometimes gives inconvenience to a user who needs an emergency contact, it is also possible to allow the user to turn on or off a function whose setting is to be automatically

## Claims

1. A mobile wireless terminal comprising various function modules controlled by CPU (201); and a non-contact IC adapted to receive function limiting information from a reader/writer installed in a predetermined area, said function limiting information indicating power on/off upon entry into, or exit from, the predetermined area,
said mobile wireless terminal further comprising:
(a) a CPU (201) adapted to change over to a dormant state in which an interrupt signal can be accepted;
(b) a non-contact IC control unit (203) adapted to operate intermittently regardless of an operating status of said CPU (201) and, upon recognizing that said non-contact IC has received function limiting information from said reader/writer, to output an interrupt signal and the function limiting information to said CPU (201), wherein said CPU (201);
(i) is adapted to turn off power supplied to the various function modules when the interrupt signal and function limiting information indicating power-off are received and, after that, to change over to the dormant state and (ii) is adapted to return to a non-dormant state, when the interrupt signal and function limiting information indicating power-on are received in the dormant state and, after that, to turn on the power supplied to said various function modules; and
(c)non-contact IC usage status notifying means adapted to notify a usage status of said non-contact IC to a user according to an instruction from said non-contact IC control unit (203), wherein said non-contact IC usage status notifying means is configured by an LED turned on by said non-contact IC control unit (203).

2. The mobile wireless terminal as defined by claim 1 wherein,
in the function limiting information, setting or release of function limitations on said various function modules may be specified for each of said various function modules, and
said CPU is adapted to place function limitations on said various function modules according to the interrupt signal and the function limiting information.

3. The mobile wireless terminal as defined by claim 1 or 2 wherein
said CPU (201) (a) is adapted to save a function setting state of said various function modules in an information storage unit when the function limiting information indicating power-off is received, and (b) is adapted to return the function setting state of said various function modules to a state before the dormant state based on a content saved in said information storage unit when the function limiting information indicating power-on is received.

4. The mobile wireless terminal as defined by one of claims 1-3 wherein
if the function limiting information, which is recognized as newly received information, is different from the function limiting information which is recognized as previously received information and is saved in a buffer, said non-contact IC control unit (203) (a) is adapted to output the function limiting information instructing the setting of function limitations and to update the content saved in said buffer with the function limiting information which is recognized as a newly received information.

## Patentansprüche

1. Mobiles Drahtlos-Endgerät mit verschiedenen Funktionsmodulen, die durch eine CPU (201) gesteuert werden, und mit einem Kontaktlos-IC, der dazu geeignet ist, Funktionseinschränkungsinformation von einem in einem vorgegebenen Bereich installierten Lese-/Schreibgerät zu empfangen, wobei die Funktionseinschränkungsinformation beim Eintritt in einen vorgegebenen Bereich oder beim Verlassen des vorgegebenen Bereichs "Spannung ein-/ausschalten" anzeigt,
wobei das mobile Drahtlos-Endgerät ferner aufweist:
(a) eine CPU (201), die dazu geeignet ist, auf einen Ruhezustand zu schalten, in dem ein Unterbrechungssignal empfangen werden kann;
(b) eine Kontaktlos-IC-Steuereinheit (203), die dazu geeignet ist, unabhängig von einem Betriebszustand der CPU (201) intermittierend zu arbeiten, und nach dem Erfassen, dass der Kontaktlos-IC Funktionseinschränkungsinformation vom Lese-/Schreibgerät empfangen hat, ein Unterbrechungssignal und die Funktionseinschränkungsinformation an die CPU (201) auszugeben, wobei die CPU (201)
(i) dazu geeignet ist, die den verschiedenen Funktionsmodulen zugeführte Spannung auszuschalten, wenn das Unterbrechungssignal und die "Spannung ausschalten" anzeigende Funktionseinschränkungsinformation empfangen werden, und anschließend auf den Ruhezustand umzuschalten; und
(ii) dazu geeignet ist, auf einen Nicht-Ruhezustand zurückzuschalten, wenn das Unterbrechungssignal und die "Spannung einschalten" anzeigende Funktionseinschränkungsinformation im Ruhezustand empfangen werden, und anschließend die den verschiedenen Funktionsmodulen zuzuführende Spannung einzuschalten; und
(c) eine Kontaktlos-IC-Betriebszustandübermittlungseinrichtung, die dazu geeignet ist, einem Benutzer einen Betriebszustand des Kontaktlos-IC gemäß einer Anweisung von der Kontaktlos-IC-Steuereinheit (203) zu übermitteln, wobei die Kontaktlos-IC-Betriebszustandübermittlungseinrichtung durch eine durch die Kontaktlos-IC-Steuereinheit (203) eingeschaltete LED konfiguriert ist.

2. Endgerät nach Anspruch 1, wobei
in der Funktionseinschränkungsinformation das Setzen oder Freigeben von Funktionseinschränkungen für die verschiedenen Funktionsmodule für jedes der verschiedenen Funktionsmodule spezifiziert werden kann, und
die CPU dazu geeignet ist, die Funktionseinschränkungen für die verschiedenen Funktionsmodule gemäß dem Unterbrechungssignal und der Funktionseinschränkungsinformation festzulegen.

3. Endgerät nach Anspruch 1 oder 2, wobei
die CPU (201) (a) dazu geeignet ist, einen Funktionssetzzustand der verschiedenen Funktionsmodule in einer Informationsspeichereinheit zu speichern, wenn die "Spannung ausschalten" anzeigende Funktionseinschränkungsinformation empfangen wird, und (b) dazu geeignet ist, den Funktionssetzustand der verschiedenen Funktionsmodule basierend auf einem in der Informationsspeichereinheit gespeicherten Inhalt auf einen Zustand vor dem Ruhezustand zurückzusetzen, wenn die "Spannung einschalten" anzeigende Funktionseinschränkungsinformation empfangen wird.

4. Endgerät nach einem der Ansprüche 1 bis 3, wobei,
wenn die Funktionseinschränkungsinformation, die als neu empfangene Information erkannt wird, sich von der Funktionseinschränkungsinformation unterscheidet, die als zuvor empfangene Information erkannt und in einem Puffer gespeichert wurde, die Kontaktlos-IC-Steuereinheit (203) (a) dazu geeignet ist, die Funktionseinschränkungsinformation auszugeben, die das Setzen von Funktionseinschränkungen anweist, und den im Puffer gespeicherten Inhalt mit der Funktionseinschränkungsinformation zu aktualisieren, die als neu empfangene Information erkannt wurde.

## Revendications

1. Terminal mobile sans fil comprenant de multiples modules de fonction commandés par une unité CPU (201), et une carte IC sans contact apte à recevoir des informations de limitation de fonction en provenance d'un lecteur/graveur installé dans une zone prédéterminée, lesdites informations de limitation de fonction indiquant la mise sous tension / hors tension lors de l'entrée dans ou de la sortie de la zone prédéterminée ;
ledit terminal mobile sans fil comprenant en outre :
(a) une unité CPU (201) apte à passer à un état inactif dans lequel un signal d'interruption peut être accepté ;
(b) une unité de commande de carte IC sans contact (203) apte à fonctionner de manière intermittente indépendamment d'un état de fonctionnement de ladite unité CPU (201) et, lorsqu'il est détecté que ladite carte IC sans contact a reçu des informations de limitation de fonction en provenance dudit lecteur/graveur, à générer en sortie un signal d'interruption et les informations de limitation de fonction vers ladite unité CPU (201), dans lequel ladite unité CPU (201) ;
(i) est apte à mettre hors tension l'alimentation électrique fournie aux multiples modules de fonction lorsque le signal d'interruption et les informations de limitation de fonction indiquant une mise hors tension sont reçus et, après cela, à passer à l'état inactif ; et
(ii) apte à revenir à un état actif, lorsque le signal d'interruption et les informations de limitation de fonction indiquant une mise sous tension sont reçus dans l'état inactif et, après cela, à mettre sous tension l'alimentation électrique fournie auxdits multiples modules de fonction ; et
(c) un moyen d'indication d'état d'utilisation de carte IC sans contact apte à indiquer un état d'utilisation de ladite carte IC sans contact à un utilisateur, selon une instruction provenant de ladite unité de commande de carte IC sans contact (203) ;
dans lequel ledit moyen d'indication d'état d'utilisation de carte IC sans contact est configuré par une LED mise sous tension par ladite unité de commande de carte IC sans contact (203).

2. Terminal mobile sans fil selon la revendication 1, dans lequel,
dans les informations de limitation de fonction, la définition ou le déclenchement de limitations de fonction sur lesdits multiples modules de fonction peut être spécifié(e) pour chacun desdits multiples modules de fonction ; et
ladite unité CPU est apte à placer des limitations de fonction sur lesdits multiples modules de fonction selon le signal d'interruption et les informations de limitation de fonction.

3. Terminal mobile sans fil selon la revendication 1 ou 2, dans lequel
ladite unité CPU (201) (a) est apte à enregistrer un état de définition de fonction desdits multiples modules de fonction dans une unité de stockage d'informations lorsque les informations de limitation de fonction indiquant une mise hors tension sont reçues, et (b) est apte à remettre l'état de définition de fonction desdits multiples modules de fonction dans un état antérieur à l'état inactif, sur la base d'un contenu enregistré dans ladite unité de stockage d'informations lorsque les informations de limitation de fonction indiquant une mise sous tension sont reçues.

4. Terminal mobile sans fil selon l'une quelconque des revendications 1 à 3, dans lequel
lorsque les informations de limitation de fonction, lesquelles sont reconnues en tant que des informations nouvellement reçues, sont différentes des informations de limitation de fonction qui sont reconnues en tant que des informations précédemment reçues et sont enregistrées dans une mémoire tampon, ladite unité de commande de carte IC sans contact (203) (a) est apte à générer en sortie les informations de limitation de fonction ordonnant la définition de limitations de fonction, et à mettre à jour le contenu enregistré dans ladite mémoire tampon avec les informations de limitation de fonction qui sont reconnues en tant que des informations nouvellement reçues.
